# EUROPEAN PATENT APPLICATION

(11) **EP 1 513 181 A1**
(43) Date of publication of application: **09.03.2005**
(21) Application number: 04254758.8
(22) Date of filing: 06.08.2004
(51) Int. Cl.: H01J 1/312, H01J 9/02

(54) **Fabrication of electronic devices**

(30) Priority: 04.09.2003 US 656635
(71) Applicant: Hewlett-Packard Development Company, L.P., Houston, Texas 77070 (US)
(72) Inventor: Kuo, Huei-Pei, Cupertino, CA 95014 (US); Sheng, Xia, Los Altos, CA 94022 (US); Birecki, Henryk, Palo Alto, CA 94303 (US); Lam, Si-Ty, Pleasanton, CA 94588 (US); Naberhuis, Steven L., Fremont, CA 94536 (US)
(74) Representative: Powell, Stephen David

(57) **Abstract**

A method for forming pores within a central area of a semi-conductive or conductive surface (114) includes forming on a substrate (112) a semi-conductive or conductive surface (114) such that, upon application of an electric field at the semi-conductive or conductive surface (114), an intensity of the electric field at a central area of the surface is at least as great as an intensity of the electric field at a perimeter of the surface. The method includes anodizing the semi-conductive or conductive surface (114) by generating the electric field at the semi-conductive or conductive surface (114) to form a porous region within the semi-conductive or conductive surface (114).

## Description

The present invention relates generally to the field of information storage devices, information displays, and other electronic devices that utilize electron emission devices. Specifically, the invention relates to the fabrication of semiconductor devices using anodization to form porous regions that serve as electron emitters.

Interest in room temperature or cold electron emitters has flourished in recent years based on the need for new applications in vacuum microelectronics, such as flat panel displays, electron guns, and microwave tubes. Among various kinds of emitters, silicon-based devices have been of interest owing to the well-developed technological foundation for silicon material, especially in integrated circuits. Planar or flat cold cathodes, such as metal-insulator-metal (MIM) or metal-insulator-semiconductor (MIS) diodes, have been investigated by many researchers because of their low operation voltage and low sensitivity to pressure. However, these emitters have poor efficiency and shortened life expectancy. Porous silicon (PS), which can be easily fabricated on silicon substrates, has shown many advantages as a surface-emitting cold cathode device. The efficiency and stability of this material are favorable compared to the prior art MIM and MIS devices mentioned above.

Porous surfaces of various materials can be fabricated by anodization, an electrochemical process. In this method, an anode and a cathode are immersed in an electrolyte, typically a diluted hydrofluoric acid (HF). When a current of appropriate magnitude is provided between the anode and the cathode, formation of pores on the surface of the anode occurs. An optional light source may be applied to promote the anodization. To fabricate porous silicon, a silicon wafer is used as the anode. Platinum is often utilized as the cathode because of its high conductivity, HFresistance, and processing predictability. Other metals of similar characteristics may also be used.

A field emission flat emitter device 10 is shown in PRIOR ART Figures 1-6, at various stages of production and illustrates a known process of anodizing silicon to produce porous silicon. A polycrystalline silicon layer 14 is grown or deposited over the substrate that is, for example, composed of single crystal silicon 12. Next, as shown in Figure 2, a dielectric layer 16 is grown over the polycrystalline silicon layer 14. An opening 13 is made in the dielectric material 16, as shown in Figure 3, to reveal a surface region of the polycrystalline silicon layer 14 for anodization.

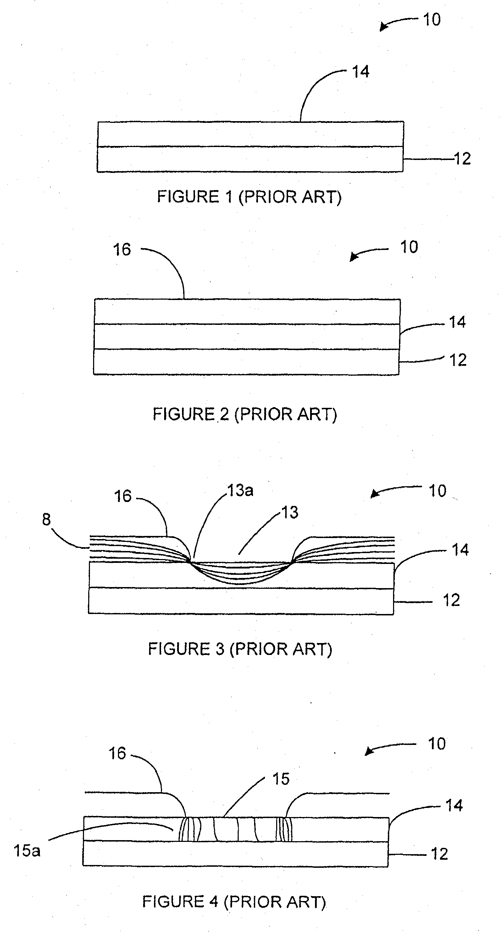

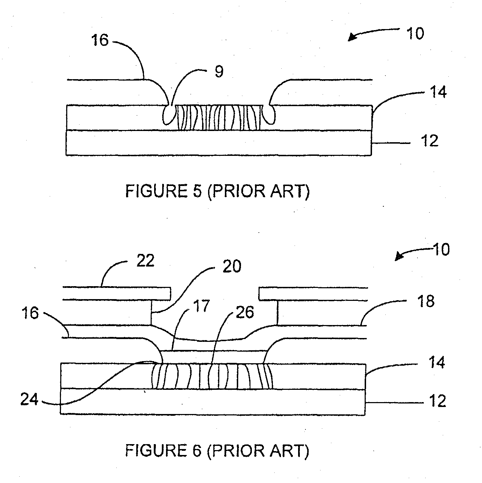

During the anodization process an electric field is generated, and the opening 13 of the dielectric layer 16 causes an increased intensity of the electric field at the boundaries 13a of the dielectric layer 16 and the polycrystalline silicon layer 14. The intensity of the electric field is shown by the equipotential lines 8 in Figure 3. The increased intensity of the electric field at the boundaries 13a promotes accelerated anodization at the boundaries 13a as opposed to the central area of the polycrystalline silicon layer 14. The anodization creates a porous region in the polycrystalline silicon layer 14, as illustrated by the vertical lines 15 in Figure 4. The accelerated anodization along the boundaries 13a increases the porosity in this localized area 15a. This non-uniform anodization adversely affects the emission properties of the device, destroying its utility for certain applications. The intensity of the electric field can be increased to create a greater concentration of pores in the central area of the polycrystalline layer 14, but the porosity along the boundaries will also be increased. As shown in Figure 5, this high concentration of pores along the boundaries can lead to pits 9 in the polycrystalline silicon layer. This damage often leads to device failure or shortened life expectancy.

To be used as an electron emission device, additional layers of dielectric and conductive materials are typically added on top of the anodized structure as shown in Figure 6. Figure 6 illustrates a finished field emission emitter device 10 with a second dielectric layer 17, addition of an extracting electrode 18, a spacer dielectric layer 20 and a focusing electrode 22. The boundary region 24 of the silicon layer 14 and the dielectric layer 16 is where electron emission is most concentrated, rather than in the central region 26 thereof. This is undesirable because emission from the boundary region 24 does not get transmitted as efficiently as emission from the central region 26. Also, emissions from the boundary 24 region cannot be as easily focused as emission from the central region 26. These effects can render the electron emission device useless for many applications.

The present invention discloses a method for forming pores within a central area of a semi-conductive or conductive surface. The method includes forming a semi-conductive or conductive surface on a substrate. This semi-conductive or conductive surface is formed in a manner ensuring that upon application of an electric field at the semi-conductive or conductive surface an intensity of the electric field at a central area of the surface is at least as great as an intensity of the electric field at a perimeter of the surface. Finally, the method includes anodizing the semi-conductive or conductive surface by generating the electric field at the semi-conductive or conductive surface to form a porous region within the semi-conductive or conductive surface.

Features and advantages of the present invention will become apparent to those skilled in the art from the following description with reference to the drawings, in which:
Figures 1-6 illustrate cross-sectional diagrams of the processing steps of forming porous silicon on a flat emitter device according to the prior art.

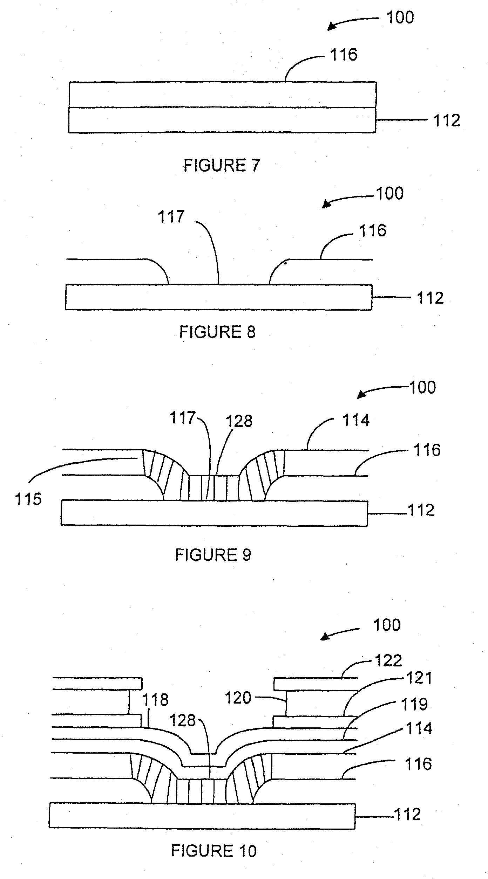

Figures 7-11 depict a cross-sectional illustration of the processing steps of manufacturing a field emission emitter device utilizing optimized pore formation in accordance with an embodiment of the present invention.

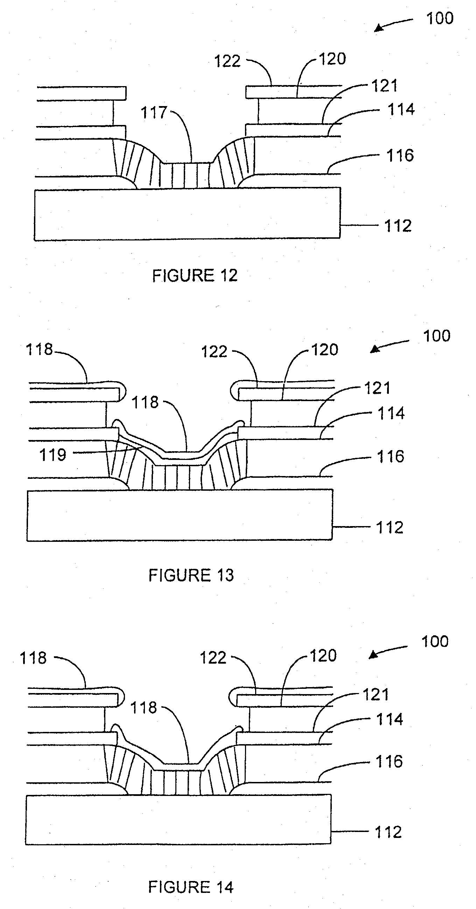

Figures 12-14 depict an alternative embodiment of forming pores in anodizable materials in accordance with an embodiment of the present invention.

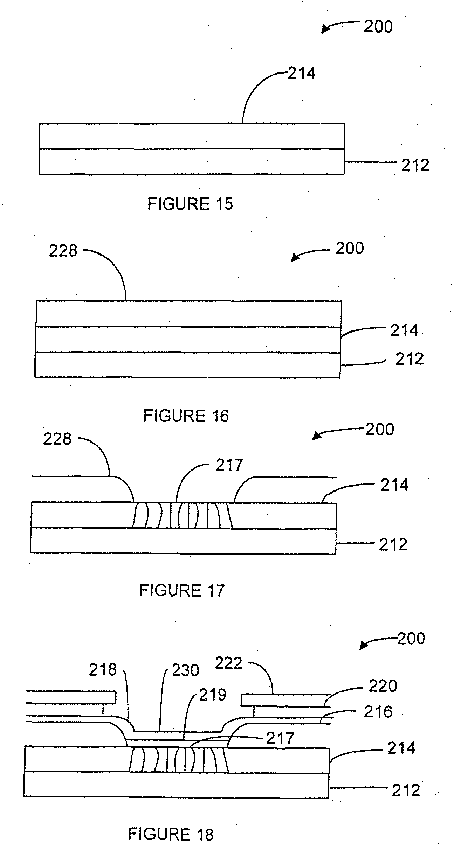

Figures 15-19 depict a cross-sectional illustration of another alternative process of manufacturing a field emission emitter device utilizing optimized pore formation in accordance with an embodiment of the present invention.

Reference will now be made to the exemplary embodiments illustrated in the drawings, and specific language will be used herein to describe the same. The present invention provides an anodization process used for the formation of pores in various anodizable materials. The improved process minimizes or eliminates the accelerated anodization at the boundary of a selected area delineated by an anti-anodization mask. One embodiment of the present invention involves the application of the improved process for the fabrication of electron emission devices that utilize porous materials such as porous polycrystalline silicon. Further, the present invention includes the fabrication of electron emission structures that utilize porous planar or flat surfaces so anodized. The operation of such a device is described in Sheng, et al. J. Vac. Sci. Techno). B, 19(1), pp 64-67, 2001, herein incorporated by reference.

In the prior art approach, a suitable dielectric material, e.g. silicon nitride, is deposited on top of a conducting or semi-conducting layer of material, e.g. polycrystalline silicon, which is to be anodized. Subsequently selected areas of the dielectric material are removed to expose the underlying layer. During anodization the electrical current that causes the anodization to occur flows only through the exposed areas of polycrystalline silicon. The area under the remaining dielectric material is protected and not anodized. The electric field tends to intensify at the boundary of the dielectric mask and the polycrystalline material and to accelerate the anodization process in that region. The anodizing intensifies around the boundary region, but is reduced at the central region, which is where the preferred anodization and porous material is desired. The present invention has alternative embodiments for minimizing or eliminating the acceleration of anodization of the boundary region by substituting either the masking material or by altering the order of steps performed during fabrication.

Figure 7 illustrates a cross-sectional view of dielectric layer 116 formed on the surface of a substrate 112. The substrate 112 may be doped to a suitable resistivity either with n- or p-type dopant utilizing doping techniques well known to those skilled in the art. Dielectric layer 116 may be formed from dielectric materials that provide good electrical insulating ability well known to those skilled in the art of semiconductor fabrication processing, such as, but not limited to, oxides, nitrides, and oxynitrides of silicon, aluminum, titanium, tantalum, tungsten, hafnium, zirconium, vanadium, niobium, molybdenum, chromium, yttrium, scandium, and combinations thereof. Further, dielectric layers include thicknesses of about 0.05 to 5 micrometers.

Next, as shown in-Figure 8, a portion of the dielectric layer 116 is removed to expose a central region 117 of the substrate 112. A remaining part of the dielectric layer 116 is left on the substrate 112. Common semiconductor processing techniques well known to those skilled in the art are utilized to make such openings. Semiconductor processing typically includes photolithography of a mask pattern, etching and removing of the undesired material while preserving the masked regions of the dielectric as shown in Figure 8.

Once the central region 117 of the substrate 112 is exposed, a semi-conductive or conductive surface 114 is formed on the remaining part of the dielectric layer 116 and on the central region 117 of the substrate 112. In one embodiment depicted in Figure 9, semi-conductive or conductive surface 114 is grown or deposited over the entire surface of the apparatus 100 such that a portion of the semi-conductive or conductive surface 114 contacts the central region 117 of the substrate 112. The semi-conductive or conductive surface 114 includes thicknesses of about 0.1 to 1 micrometers.

The top surface of the substrate 112 may be planarized using generally accepted methods such as chemical-mechanical polishing (CMP). The semi-conductive or conductive surface 114 is typically comprised of silicon that may or may not be doped. The level of doping may be varied along a depth of the semi-conductive or conductive surface 114.

The anodization process starts at the top of the semi-conductive or conductive surface 114 in the portion of the semi-conductive or conductive surface 114 which is substantially over the central region 117 of the substrate 112. As the anodization proceeds further, pores as illustrated by the generally vertical lines 115 of Figure 9 are generated in the semi-conductive or conductive surface 114, starting from the top and propagating downward within the interior of the semi-conductive or conductive surface 114. The pores form an anodized region in the semi-conductive or conductive surface. This exposes the internal portions of the semi-conductive or conductive surface 114 to be anodized. Additionally, the structure depicted in Figure 9 does not cause accelerated anodization in the perimeter. This means that an intensity of the electric field at the semi-conductive or conductive surface is at least as great as an intensity of the electric field at a perimeter of the surface.

On the top of the semi-conductive or conductive surface 114, the electric field is substantially uniform. The rate of anodization in this region is thus substantially uniform, providing desirable treatment in the anodized region 128 of the semi-conductive or conductive surface 114. As the boundary of the dielectric layer 116 and the substrate 112 is approached, the anodization current is limited by the presence of the dielectric layer 116. The anodization current thus reduces from the center to the periphery of the anodized region 128 and no sharp boundary is present between the anodized and non-anodized regions. The rate of anodization for the semi-conductive or conductive surface 114 tapers off gradually moving from the center to beyond the periphery of the anodized region 128. Thus, the electric field is more intense at a central portion of the anodized region 128 of the semi-conductive or conductive surface 114 over that of an outer perimeter thereof to form a porous region within the semi-conductive or conductive surface 114. The field concentration can be varied to modify where the pores are located and to what degree of concentration they are produced by changing the degree of field strength or intensity. This can insure that a concentration of pores in a central area of the semi-conductive or conductive layer is at least as great as a concentration of pores in a perimeter of the semi-conductive or conductive layer.

Alternative embodiments replace the semi-conductive or conductive surface with other conductive or polycrystalline materials that can be made porous.

Anodization may also be performed using conventional photoanodization where the surface is exposed to HF and light emissions to promote pore formation in the crystalline surface when the bias potential is applied to the anode and the cathode. Thus, layers fabricated prior to the anodizing step that are to be maintained after anodization should be resistant to HF or otherwise be protected from the same.

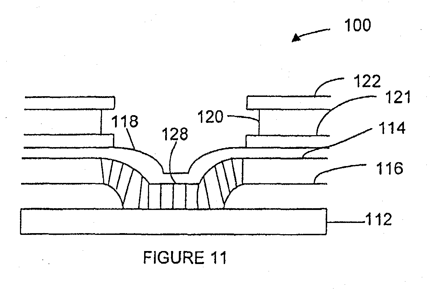

Once the anodization of the semi-conductive or conductive surface 114 is completed, additional layers are formed to fabricate an electron emission device. These additional layers are formed using additional processing steps as illustrated in the cross-sectional view of Figure 10. An optional second dielectric layer 119 can be formed on the semi-conductive or conductive surface. If formed, dielectric layer 119 serves to reduce leakage current of the emitter device. Subsequently, a conductive layer 118 is formed on the second dielectric layer 119. If the dielectric layer 119 was not formed, the conductive layer 118 is formed on the semi-conductive or conductive surface as shown is Figure 11. Layer 118 can be processed to include thicknesses of about 3 to 15 nm with 10nm or less being preferred over the anodized region 128 of the semi-conductive or conductive surface 114. Beyond the anodized region 128, no emission occurs because dielectric layer 116 blocks the current flow.

Conductive layer 118 serves as an extraction electrode during the operation of emitter device 100. Extraction is the process of extracting electrons for emission. A voltage difference is applied between layer 118 and the backside of substrate 112. When the voltage on layer 118 is more positive than the voltage on the substrate 112, the electrons are transported from the supply substrate 112 through the anodized region 128 of the semi-conductive or conductive surface 114 and emit off the surface of conductor layer 118.

Following the formation of the first conductive layer 118, a second conductive layer 121 is formed on the first conductive layer 118. The second conductive layer 121 serves as a contact layer. As shown in Figure 10, a third dielectric layer 120 is formed on the second conductive layer 121, and a third conductive layer 122 is formed on the third dielectric layer 120. Portions of the second conductive layer 121, the third dielectric layer 120, and the third conductive layer 122 are removed above the anodized region. When the portion of the third dielectric layer 120 is removed, it can be recessed to expose more contact area of the second conductive layer 121.

In the alternative embodiment shown in Figure 11, a second dielectric layer 120 is formed on the second conductive layer 121, and a third conductive layer 122 is formed on the second dielectric layer 120. Portions of the second conductive layer 121, the second dielectric layer 120, and the third conductive layer 122 are removed above the anodized region.

A positive voltage relative to that of layer 118 is further applied to an external electrode (not shown), i.e. the anode, which is typically located in front of and away from layer 118, to establish an electric field to attract the emitted electrons toward the anode. The external or anode layer is supported and isolated by additional dielectric or resistive material not shown in Figures 10 or 11. Conductor layer 122 serves as a focusing electrode during operation of the emitter device.

Conductor layers 118, 122 and the anode layer may be formed from metal, such as aluminum, tungsten, molybdenum, titanium, copper, gold, silver, tantalum, chrome, etc. and any alloys or multilayered films thereof, doped polysilicon, graphite, etc. or combinations of metal and non-metal.

Dielectric layer 120 includes thicknesses of about 0.1 to 5 micrometers and conductor layers 121, 122 and the anode layers each include thicknesses of about 0.02 to 1 micrometers.

Further, since the illustrated embodiments of the present invention only involve modifying the steps of forming the polycrystalline layer and the dielectric layer as compared with the prior art techniques, no significant increase in expense or time is incurred to adopt the processes of the present invention over that of the prior art.

Alternatively, Figure 12 depicts how the anodization process can be delayed until the emitter structure is fabricated. For example, layers 121, 120, and 122 are fabricated before anodization is performed. Once these layers are in place, the anode, along with contacts 121 or layer 122 (optional), or both, are biased at an appropriate voltage to control the profile of anodization in area 117 as is shown in Figure 12. Further, layer 122 can function as the anode during anodization with layer 121 being biased to control the profile of the anodized region 128. Afterwards, as illustrated in Figure 12, an optional third dielectric layer 119 can be formed on the anodized region of the semi-conductive or conductive surface and a third conductive layer 118 is formed on layer 119 above area 117 and even on the exposed portions of layer 121. If the third dielectric layer 119 is not formed, the third conductive layer 118 is formed on the anodized region of the semi-conductive or conductive surface as shown in Figure 14.

Another alternative embodiment of the present invention utilizes a conductive anodization mask to minimize the field effect at the outer regions that lead to poor porous silicon formation, which results in poor performance and shortened life, span of the emitter. A planar electron emission device 200 and the process for fabricating the same are depicted in Figures 15-19. The emitter device 200 illustrated in Figure 15 begins with a substrate 212, which may or may not be doped and upon which is formed a semi-conductive or conductive surface 214. Semi-conductive or conductive surface 214 may be doped to the desired resistivity and is typically comprised of silicon.

Next, in Figure 16 a conductive shield 228 is formed on the semi-conductive or conductive surface 214 using processes well known to those skilled in the art. The conductive shield 228 may be formed from highly conductive and corrosive resistant metals (chrome, platinum, copper, gold, silver, tantalum, etc. and any alloys or multilayered films thereof). The semi-conductive or conductive surface 214 includes thickness ranges of about 0.1 to 0.5 micrometers and conductor shield 228 includes thicknesses of about 0.02 to 0.5 µm, with 0.1 µm being preferred.

As shown in Figure 15, a portion of the conductive shield 228 is removed, exposing a central region 217 of the semi-conductive or conductive surface 214 and leaving a remaining part of the conductive shield 228. Traditional semiconductor processing steps are utilized to remove a portion of the conductive shield 228, which steps are well known to those skilled in the art.
At this point, the central region 217 of the semi-conductive or conductive surface 214 is anodized to create an anodized region in the semi-conductive or conductive surface 214. The conductive shield 228 serves as a mask to protect the underlying semi-conductive or conductive surface and to direct porous silicon formation in the exposed central region 217 of the semi-conductive or conductive surface 214. The advantage of utilizing a conductive shield 228 during the anodization process is that a uniform electric field gradient forms throughout the central region 217 of the semi-conductive or conductive surface 214 when an electric field is applied. This eliminates field concentration at the boundary of the conductive layer and the semi-conductive or conductive surface 214 that would normally form in a dielectric boundary layer of the prior art. The semiconductor device 200 is processed so that the semi-conductive or conductive surface 214 includes thicknesses of about 0.1 to 1 micrometers.

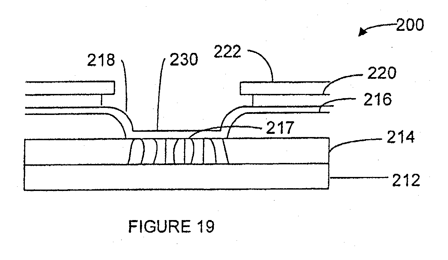

At this point, the remaining part of the conductive shield 228 is removed utilizing conventional fabrication techniques. Next, a dielectric layer 216 is formed on the semi-conductive or conductive surface 214 to reduce leakage current. Then a portion of the dielectric layer is removed above the central region 217. Afterwards, an optional second dielectric layer 219 is formed on the central region 217 and, if deposited rather than thermally grown, the second dielectric layer 219 is also formed on top of the first dielectric layer 216. Layer 216 will now have an increased thickness because of the addition of the second dielectric layer 219. If the second dielectric layer 219 is formed, a conductive layer 218 is formed on the remaining portion of the first dielectric layer 216 and on the second dielectric layer 219, or just on the second dielectric layer 219 if the second dielectric layer 219 was formed on the first dielectric layer 216. However, if the second dielectric layer 219 is not formed, the conductive layer 218 is formed on the first dielectric layer 216 and on the central region 217 of semi-conductive or conductive layer 214 as depicted in Figure 19.

Optionally, an opening can be formed over area 217 by removing a portion of layer 218 situated over the central region 217. If this is the case, a second metal layer 230 can be fabricated over area 217 and serves as the extractor electrode. Layer 230 may be deposited at a later stage. Conductor layer 218 typically serves as the contact to the extractor electrode or layer 230 within emitter device 200 and both operate together to form the extractor electrode. The thickness of layer 218 typically includes from 3 to 15 nm. The thickness of layer 230 typically includes a range from 0.01 to 1 micrometers.

Next, as further illustrated in the cross-sectional diagram of Figure 18, a third dielectric layer 220 is formed on the conductive layer 218, 230. The third dielectric layer 220 serves as an insulating barrier between the first conductive layer 218, 230 and a second conductive layer 222, which is formed on the third dielectric layer 220. Portions of the third dielectric layer 220 and the second conductive layer 222 are then removed over the central region 217 of the semi-conductive or conductive surface 214. When the portion of the third dielectric layer 220 is removed, it can be recessed to expose more contact area of the first conductive layer 218, 230.

Conductor layer 222 serves as a focusing electrode within emitter device 200 and focuses the emitted electrons extracted by extractor electrode 218, 230. Conductor layers 218, 230 and 222 may be formed from metal (aluminum, tungsten, molybdenum, titanium, copper, gold, silver, tantalum, etc. and any alloys or multi-layered films thereof), doped polysilicon, graphite, etc. or combinations of metal and non-metal, e.g. C, films.

In an alternative embodiment shown in Figure 19, layer 219 is not formed and a second dielectric layer 220 is formed on the conductive layer 218, 230. A second conductive layer 222 is formed on the second dielectric layer 220. Portions of the second dielectric layer 220 and the second conductive layer 222 are then removed over the central region 217 of the semi-conductive or conductive surface 214. This second dielectric layer 220 and the second conductive layer 222 serve the same purposes as their corresponding layers in the previous embodiment.

The anodization process of the present invention can extend to other materials that can be anodized and is not limited to silicon. The application of the anodized materials as an electron source is useful in such fields as information storage devices, information displays, and other electronic devices where electron sources are used. These other devices include electron microscopes, electron beam lithographic and diagnostic tools, electronic amplifiers and oscillators. Significantly, the present invention offers improved fabrication techniques applied to electron emission devices having flat or planar porous silicon structures for optimizing electron emission in these applications. Additional applications where this invention can be of benefit include gas and liquid filters.

It is to be understood that the above-described arrangements are only illustrative of the application for the principles of the present invention. Numerous modifications and alternative arrangements may be devised by those skilled in the art without departing from the spirit and scope of the present invention and the appended claims are intended to cover such modifications and arrangements. Thus, while the present invention has been shown in the drawings and fully described above with particularity and detail in connection with what is presently deemed to be the most practical and preferred embodiment(s) of the invention, it will be apparent to those of ordinary skill in the art that numerous modifications, including, but not limited to, variations in size, materials, shape, form, function and manner of operation, assembly and use may be made, without departing from the principles and concepts of the invention as set forth in the claims.

## Claims

1. A fabrication method for forming pores within a central area (117) of a semi-conductive or conductive surface (114), comprising the steps of:
forming a semi-conductive or conductive surface (114) on a substrate (112) in a manner ensuring that upon application of an electric field at the semi-conductive or conductive surface (114) an intensity of the electric field at a central area (117) of the surface is at least as great as an intensity of the electric field at a perimeter of the surface; and
anodizing the semi-conductive or conductive surface (114) by generating the electric field at the semi-conductive or conductive surface (114) to form a porous region (128) within the semi-conductive or conductive surface (114).

2. A method according to claim 1 wherein the forming step further comprises:
forming a dielectric layer (116) on the substrate (112);
removing a portion of the dielectric layer (116), leaving a remaining part of the dielectric layer and exposing a central region (117) of the substrate (112); and
forming the semi-conductive or conductive surface (114) on a portion of the remaining part of the dielectric layer (116) and on the central region (117) of the substrate (112).

3. A method according to claim 2 further comprising the step of anodizing the semi-conductive or conductive surface (114) to form an anodized region (128) in the semi-conductive or conductive surface (114) above an area of contact between the semi-conductive or conductive surface (114) and the substrate (112).

4. A method according to claim 3, further comprising:
forming a conductive layer (118) on the semi-conductive or conductive surface (114);
forming a second conductive layer (121) on the first conductive layer (118);
forming a second dielectric layer (120) on the second conductive layer (121);
forming a third conductive layer (122) on the second dielectric layer (120); and
removing a portion of the second conductive layer (121), the second dielectric layer (120) and the third conductive layer (122) above the anodized region (128).

5. A method according to claim 2, further comprising:
forming a conductive layer (118) on the semi-conductive or conductive surface (114);
forming a second dielectric layer (120) on the conductive layer (118);
forming a second conductive layer (121) on the second dielectric layer (120); and
removing a portion of the first conductive layer (118), the second dielectric layer (120) and the second conductive layer (121) above an area of contact between the semi-conductive or conductive surface (114) and the substrate (112), leaving a remaining part of the second conductive layer (121) and exposing a central region (117) of the semi-conductive or conductive surface (114).

6. A method according to claim 5, further comprising:
anodizing the central region (117) of the semi-conductive or conductive surface (114) to form an anodized region (128) in the semi-conductive or conductive surface (114); and
forming a third conductive layer (122) on the remaining part of the second conductive layer (121) and on the anodized region (128).

7. A method according to claim I wherein the forming step further comprises:
forming the semi-conductive or conductive surface (214) on the substrate (212);
forming a conductive shield (228) on the semi-conductive or conductive surface (214); and
removing a portion of the conductive shield (228), exposing a central region (217) of the semi-conductive or conductive surface (214) and leaving a remaining part of the conductive shield (228).

8. A method according to claim 7 further comprising the step of anodizing the central region (217) of the semi-conductive or conductive surface (214) to create an anodized region in the semi-conductive or conductive surface (214).

9. A method according to claim 8, further comprising:
removing the remaining part of the conductive shield (228);
forming a dielectric layer (216) on the semi-conductive or conductive surface (214); and
removing a portion of the dielectric layer (216) above the anodized region.

10. An electron emission device (100) comprising:
a dielectric barrier (116) positioned on a portion of a substrate (112) and at least partially defining a perimeter of a central region (117) of the substrate (112);
a semi-conductive or conductive layer (114) positioned on at least a portion of the dielectric barrier (116) and on the central region (117) of the substrate (112); and
a porous region located in a surface area of the semi-conductive or conductive layer (114) above the central region (117) of the substrate (112) wherein a concentration of pores in a central area of the semi-conductive or conductive layer (114) is at least as great as a concentration of pores in a perimeter of the semi-conductive or conductive layer (114).
